# FASCICULE DE BREVET EUROPEEN

(11) **EP 3 986 733 B1**
(45) Date de publication et mention de la délivrance du brevet: **14.08.2024**
(21) Numéro de dépôt: 20742338.5
(22) Date de dépôt: 15.06.2020
(51) Int. Cl.: B60J 5/04

(54) **RENFORT HORIZONTAL DE PORTE DE VÉHICULE AUTOMOBILE**
HORIZONTALE VERSTÄRKUNG FÜR EINE KRAFTFAHRZEUGTÜR
HORIZONTAL REINFORCEMENT FOR A MOTOR VEHICLE DOOR

(30) Priorité: 20.06.2019 FR 1906674
(43) Date de publication de la demande: 27.04.2022
(73) Titulaire: Stellantis Auto SAS, 78300 Poissy (FR)
(72) Inventeur: THOR, Tou, 25150 Pont de Roide Vermondans (FR)
(86) Numéro de dépôt international: PCT/FR2020/051020
(87) Numéro de publication internationale: WO 2020/254748

(56) Documents cités:
- EP-A1- 3 127 731
- EP-A2- 1 527 923
- WO-A1-2015/011350
- DE-A1- 102013 018 236
- JP-A- 2008 190 209
- JP-A- 2008 307 972
- US-A1- 2019 084 387

## Description

### Domaine technique

La présente invention revendique la priorité de la demande française 1906674 déposée le 20 Juin 2019.

L'invention a trait au domaine des véhicules automobiles, et, plus particulièrement, à la structure d'une porte de véhicule automobile.

### Technique antérieure

À l'heure actuelle, il existe de nombreux protocoles, développés par des organismes indépendants, qui permettent d'évaluer la résistance des véhicules à différents chocs, dont les chocs latéraux. Ces protocoles sont subis par les véhicules avant leurs mises en circulation, et déterminent les dangers encourus par les passagers ou les piétons lors de ces chocs. En particulier, la résistance d'une porte de véhicule, lors d'un choc latéral, est étudiée.

Ainsi, une porte de véhicule comprend généralement une paroi extérieure et une doublure formant un caisson, avec plusieurs renforts positionnés dans le caisson. Habituellement, un renfort supérieur est positionné longitudinalement le long d'un bord supérieur du caisson. Un renfort latéral principal est également positionné en bas du caisson, entre un bord avant et un bord arrière dudit caisson. On retrouve également un support de commande d'ouverture extérieure de la porte du véhicule, qui permet l'ouverture et la fermeture de la porte. Celui-ci est positionné à l'arrière du caisson, et est fixé au renfort supérieur.

Lors d'un choc latéral, un enfoncement des renforts supérieur et latéral principal a lieu. Cet enfoncement entraîne dès lors une déformation du support de commande et, partant, un déplacement de la commande d'ouverture extérieure vers la serrure. Le contact de la commande d'ouverture extérieure avec la serrure peut alors entraîner une déformation de celle-ci et une ouverture de la porte, mettant en danger les passagers du véhicule. Ceci est particulièrement vrai pour les commandes d'ouverture extérieure rétractables, plus couramment désignées par l'expression anglo-saxonne « flush », qui sont plus volumineuses.

Le document de brevet publié WO 2016/113475 A1 divulgue une porte de véhicule automobile, comprenant une paroi extérieure et une doublure formant un caisson, avec une commande d'ouverture extérieure de porte située à l'arrière du caisson. Le caisson comprend également un renfort incliné situé à l'avant de la commande d'ouverture extérieure. Ce renfort comprend des zones d'affaiblissement à distance de son milieu afin de filtrer la déformation résultant d'un choc latéral, dans le but de préserver la zone de montage de la commande d'ouverture extérieure et le câble de commande de la serrure, et, partant, d'éviter une ouverture intempestive de la porte. Ces mesures se concentrent à préserver le passage du câble de commande de la serrure mais manquent d'empêcher une interférence néfaste entre la commande d'ouverture extérieure et la serrure.

Le document EP 1 527 923 A2 divulgue également un exemple d'un commande d'ouverture extérieure dans une porte de véhicule avec des renforts.

### Exposé de l'invention

L'invention a pour objectif de pallier au moins un des inconvénients de l'état de la technique susmentionné. Plus particulièrement, l'invention a pour objectif d'empêcher l'ouverture de la porte d'un véhicule lors d'un choc latéral.

L'invention a pour objet une porte de véhicule automobile, avec une paroi extérieure et une doublure formant un caisson, ledit caisson comprenant : un renfort latéral principal s'étendant longitudinalement entre un bord avant et un bord arrière dudit caisson ; un renfort supérieur s'étendant longitudinalement le long d'un bord supérieur dudit caisson ; un support de commande d'ouverture extérieure de la porte, fixé au renfort supérieur ; remarquable en ce que le caisson comprend, en outre : un renfort latéral auxiliaire s'étendant au-dessus du renfort latéral principal, longitudinalement entre les bords avant et arrière du caisson, et fixé au support de commande d'ouverture extérieure de la porte.

Selon un mode avantageux de l'invention, le renfort latéral auxiliaire comprend une extrémité arrière fixée à une portion centrale du bord arrière du caisson, ladite portion centrale étant adjacente à une portion supérieure dudit bord arrière avec une zone de fixation d'une serrure de la porte.

Selon un mode avantageux de l'invention, le support de commande d'ouverture extérieure est adjacent à la zone de fixation de serrure de la porte.

Selon l'invention, le support de commande d'ouverture extérieure est une platine avec un bord supérieur fixé au renfort supérieur et un bord inférieur fixé au renfort latéral auxiliaire.

Selon l'invention, la fixation du bord supérieur et du bord inférieur du support de commande d'ouverture extérieure au renfort supérieur et au renfort latéral auxiliaire, respectivement, est répartie sur plus de 80% de la longueur de chacun desdits bords.

Selon un mode avantageux de l'invention, le caisson est vierge d'un renfort vertical entre des portions médianes du renfort latéral principal et du renfort supérieur. Selon l'invention, chacun du renfort latéral principal, du renfort supérieur et du renfort latéral auxiliaire forme une poutre avec un moment quadratique en flexion, le moment quadratique en flexion du renfort latéral auxiliaire étant inférieur au moment quadratique en flexion du renfort latéral principal.

Selon l'invention, le moment quadratique en flexion du renfort latéral auxiliaire étant inférieur à 50% au moment quadratique en flexion du renfort latéral principal.

Selon un mode avantageux de l'invention, la porte comprend la commande d'ouverture extérieure fixée au support de commande d'ouverture extérieure, ladite commande d'ouverture extérieure étant du type rétractable.

L'invention a également pour objet un véhicule automobile comprenant au moins une porte, remarquable en ce que ladite porte est selon l'invention.

Les mesures de l'invention sont intéressantes en ce qu'elles permettent de limiter la déformation du support de commande d'ouverture extérieure lors d'un choc latéral. Ainsi, l'ouverture de la porte du véhicule lors d'un tel choc est évitée. En effet, la déformation du support de commande d'ouverture extérieure entraîne un déplacement de la commande d'ouverture extérieure vers la serrure, pouvant, par interférence avec la serrure, causer l'ouverture de la porte. L'ajout d'un renfort latéral auxiliaire, positionné longitudinalement dans la porte, permet une meilleure répartition des efforts exercés sur la porte lors du choc latéral, puisque ce renfort va recevoir une partie des contraintes exercées sur la porte. De plus, le support de commande présente un appui supplémentaire sur ce renfort latéral auxiliaire, permettant ainsi une meilleure maîtrise du comportement en flexion du support. Ainsi, les interférences avec la serrure sont diminuées, évitant alors l'ouverture de la porte lors du choc. Enfin, la fabrication de ce renfort est réalisée dans des matériaux et par des techniques connus de l'homme du métier, elle est peu coûteuse. Son installation dans la porte est également facile à réaliser.

D'autres caractéristiques et avantages de la présente invention seront mieux compris à l'aide de la description et des dessins.

### Brève description des dessins

[Fig 1] est une vue de la structure d'une porte de véhicule automobile, sans la paroi extérieure ;
[Fig 2] est une vue de la zone de fixation entre un support de commande d'ouverture extérieure de porte et des renforts supérieur et latéral auxiliaire, tels que représentés à la figure 1.

### Description détaillée

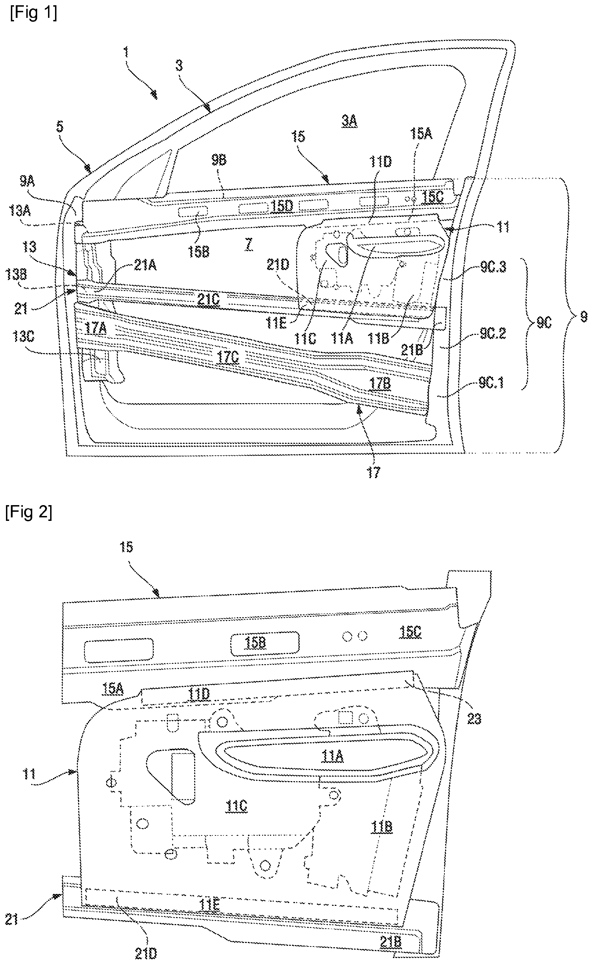

Les figures 1 et 2 montrent deux vues d'une porte de véhicule automobile avec des renforts, selon l'invention.

Le véhicule automobile 1 (partiellement représenté à la figure 1) comprend la porte 3 montée sur un cadre 5 de porte 3. La porte 3 comprend une paroi extérieure (non représentée sur ces figures pour des raisons de clarté d'exposé de l'invention) et une doublure 7 intérieure au véhicule 1, la paroi extérieure et la doublure 7 étant rattachées ensemble. La porte 3 comprend également une partie supérieure avec une vitre 3A, et une partie inférieure. Dans la partie inférieure de la porte 3, la paroi extérieure et la doublure 7 forment un caisson 9 (partiellement représenté). Ce caisson comprend notamment un support de commande d'ouverture extérieure 11 de la porte 3, qui maintient à la fois une commande d'ouverture extérieure 11A, comprenant une poignée avantageusement du type rétractable (« flush »), et une serrure 11B apte à fermer la porte 3 grâce à un mécanisme de fermeture 11C.

Le caisson 9 de la porte 3 du véhicule 1 comprend en outre plusieurs renforts.

Un renfort de charnière 13 s'étend le long d'un bord avant 9A du caisson 9. Ce renfort de charnière 13 permet de renforcer la zone de fixation des charnières de la porte 3 au cadre 5 de porte 3. Ce renfort de charnière 13 comprend une extrémité supérieure 13A, une portion médiane13B et une extrémité inférieure 13C.

La porte 3 comprend, en outre, un renfort supérieur 15 qui s'étend le long de la vitre 3A de la porte 3. Ce renfort 15 s'étend longitudinalement le long d'un bord supérieur 9B du caisson 9, et est fixé à l'avant sur le bord avant 9A du caisson 9 et sur l'extrémité supérieure 13A du renfort de charnière 13. Le renfort supérieur 15 est également fixé à l'arrière sur un bord arrière 9C du caisson 9. Ce renfort 15 comprend un bord inférieur 15A sur lequel est fixé, depuis une extrémité arrière 15C vers une portion médiane 15D dudit renfort 15, un bord supérieur 11D du support de commande d'ouverture extérieure 11. Ce renfort 15 présente avantageusement une section transversale en U et des orifices médians 15B aptes à faciliter l'absorption des chocs par le renfort 15.

Un renfort latéral principal 17 est également retrouvé dans le caisson 9 de la porte 3. Ce renfort 17 s'étend longitudinalement entre le bord avant 9A et le bord arrière 9C du caisson 9, où il est rattaché. Le renfort latéral principal 17 comprend une extrémité avant 17A et une extrémité arrière 17B, rattachées, respectivement, à l'extrémité inférieure 13C du renfort de charnière 13 et à une portion inférieure 9C.1 du bord arrière 9C du caisson 9. Avantageusement, chaque extrémité (17A, 17B) du renfort 17 présente une largeur supérieure de 30% à 40% à la largeur d'une portion médiane 17C dudit renfort 17.

Enfin, le caisson 9 comprend un renfort latéral auxiliaire 21 qui s'étend au-dessus du renfort latéral principal 17, longitudinalement entre les bords avant 9A et arrière 9C du caisson 9. Le renfort latéral auxiliaire 21 comprend une extrémité avant 21A fixée à la portion médiane 13B du renfort de charnière 13, et une extrémité arrière 21B fixée à une portion centrale 9C.2 du bord arrière 9C du caisson 9. Ce renfort latéral auxiliaire 21 comprend, en outre, une section transversale en U. Les extrémités avant 21A et arrière 21B du renfort 21 présentent une largeur supérieure à la largeur d'une portion médiane 21C dudit renfort 21. Avantageusement, la largeur de chacune des extrémités (21A, 21B) du renfort 21 est supérieure de 30% à 40% à la largeur de la portion médiane 21C.

Le support de commande d'ouverture extérieure 11 de la porte 3 comprend un bord inférieur 11E fixé à un bord supérieur 21D du renfort latéral auxiliaire 21.

Le support de commande d'ouverture extérieure 11 est une platine, dont la fixation des bords supérieur 11D et inférieur 11E au renfort supérieur 15 et au renfort latéral auxiliaire 21, respectivement, est répartie sur plus de 80% de la longueur de chacun desdits bords (11D, 11E). La fixation est avantageusement continue. Elle est avantageusement réalisée par collage. Préférentiellement, le support de commande 11 est adjacent à la zone de fixation de la serrure 11B de la porte 3. Cette zone de fixation de la serrure 11B de la porte 3 est positionnée dans une portion supérieure 9C.3 du bord arrière 9C du caisson 9 adjacente à la portion centrale 9C.2.

De manière générale, chacun du renfort latéral principal 17, du renfort supérieur 15 et du renfort latéral auxiliaire 21 forme une poutre avec un moment quadratique en flexion, le moment quadratique en flexion du renfort latéral auxiliaire 21 étant inférieur au moment quadratique en flexion du renfort latéral principal 17.

Le moment quadratique en flexion du renfort latéral auxiliaire 21 est inférieur à 50% au moment quadratique en flexion du renfort latéral principal 17.

## Revendications

1. Porte (3) de véhicule automobile (1), avec une paroi extérieure et une doublure (7) formant un caisson (9), ledit caisson (9) comprenant :
- un renfort latéral principal (17) s'étendant longitudinalement entre un bord avant (9A) et un bord arrière (9C) dudit caisson (9) ;
- un renfort supérieur (15) s'étendant longitudinalement le long d'un bord supérieur (9B) dudit caisson (9) ;
- un support de commande d'ouverture extérieure (11) de la porte (3), fixé au renfort supérieur (15) ;
- un renfort latéral auxiliaire (21) qui s'étend au-dessus du renfort latéral principal (17), longitudinalement entre les bords avant (9A) et arrière (9C) du caisson (9), le support de commande d'ouverture extérieure (11) de la porte (3) étant une platine avec un bord supérieur (11D) fixé au renfort supérieur (15) et un bord inférieur (11E) fixé au renfort latéral auxiliaire (21), **caractérisé en ce que** la fixation du bord supérieur (11D) et du bord inférieur (11E) du support de commande d'ouverture extérieure (11) au renfort supérieur (15) et au renfort latéral auxiliaire (21), respectivement, étant réparties sur plus de 80% de la longueur de chacun desdits bords (11D, 11E), chacun du renfort latéral principal (17), du renfort supérieur (15) et du renfort latéral auxiliaire (21) forme une poutre avec un moment quadratique en flexion, le moment quadratique en flexion du renfort latéral auxiliaire (21) étant inférieur à 50% au moment quadratique en flexion du renfort latéral principal (17).

2. Porte (3) de véhicule automobile (1) selon la revendication 1, **caractérisée en ce que** le renfort latéral auxiliaire (21) comprend une extrémité arrière (21B) fixée à une portion centrale (9C.2) du bord arrière (9C) du caisson (9), ladite portion centrale (9C.2) étant adjacente à une portion supérieure (9C.3) dudit bord arrière (9C) avec une zone de fixation d'une serrure (11B) de la porte (3).

3. Porte (3) de véhicule automobile (1) selon la revendication 2, **caractérisée en ce que** le support de commande d'ouverture extérieure (11) est adjacent à la zone de fixation de serrure (11B) de la porte (3).

4. Porte (3) de véhicule automobile (1) selon l'une des revendications 1 à 3, **caractérisée en ce que** le caisson (9) est vierge d'un renfort vertical entre des portions médianes (17C, 15D) du renfort latéral principal (17) et du renfort supérieur (15).

5. Porte (3) de véhicule automobile (1) selon l'une des revendications 1 à 4, **caractérisée en ce que** la porte (3) comprend la commande d'ouverture extérieure (11A) fixée au support de commande d'ouverture extérieure (11), ladite commande d'ouverture extérieure (11A) étant du type rétractable.

6. Véhicule automobile (1) comprenant au moins une porte (3), **caractérisé en ce que** ladite porte (3) est selon l'une des revendications 1 à 5.

## Patentansprüche

1. Tür (3) eines Kraftfahrzeugs (1) mit einer Außenwand und einem Futter (7), das einen Kasten (9) bildet, wobei der Kasten (9) umfasst:
- eine seitliche Hauptverstärkung (17), die sich in Längsrichtung zwischen einer Vorderkante (9A) und einer Hinterkante (9C) des Kastens (9) erstreckt;
- eine obere Verstärkung (15), die sich in Längsrichtung entlang einer oberen Kante (9B) des Kastens (9) erstreckt;
- eine an der oberen Verstärkung (15) befestigte äußere Öffnungshalterung (11) der Tür (3);
- eine seitliche Hilfsverstärkung (21), die sich über die seitliche Hauptverstärkung (17) erstreckt und sich in Längsrichtung zwischen dem vorderen (9A) und dem hinteren (9C) Rand des Kastens (9) erstreckt,
der äußere Öffnungssteuerungsträger (11) der Tür (3) ist eine Platte mit einem oberen Rand (11D), der an der oberen Verstärkung (15) befestigt ist, und einem unteren Rand (11E), der an der seitlichen Hilfsverstärkung (21) befestigt ist, **dadurch gekennzeichnet, dass** die Befestigung des oberen Randes (11D) und des unteren Randes (11E) des äußeren Öffnungssteuerungsträgers (11) an der oberen Verstärkung (15) bzw. der seitlichen Hilfsverstärkung (21) über mehr als 80% der Länge jeder der genannten Ränder (11D) verteilt ist, 11E), wobei jede der seitlichen Hauptverstärkung (17), der oberen Verstärkung (15) und der seitlichen Hilfsverstärkung (21) einen Balken mit einem quadratischen Biegemoment bildet, wobei das quadratische Biegemoment der seitlichen Hilfsverstärkung (21) weniger als 50% des quadratischen Biegemoments der seitlichen Hauptverstärkung (17) beträgt.

2. Tür (3) für ein Kraftfahrzeug (1) nach Anspruch 1, **dadurch gekennzeichnet, dass** die zusätzliche seitliche Verstärkung (21) ein hinteres Ende (21B) aufweist, das an einem mittleren Abschnitt (9C.2) der hinteren Kante (9C) des Kastens (9) befestigt ist, wobei der mittlere Abschnitt (9C.2) an einen oberen Abschnitt (9C.3) der hinteren Kante (9C) angrenzt, mit einem Befestigungsbereich eines Schlosses (11B) der Tür (3).

3. Tür (3) eines Kraftfahrzeugs (1) nach Anspruch 2, **dadurch gekennzeichnet, dass** der äußere Öffnungssteuerträger (11) an den Schlossbefestigungsbereich (11B) der Tür (3) angrenzt.

4. Tür (3) eines Kraftfahrzeugs (1) nach einem der Ansprüche 1 bis 3, **dadurch gekennzeichnet, dass** der Kasten (9) frei von einer vertikalen Verstärkung zwischen mittleren Abschnitten (17C, 15D) der seitlichen Hauptverstärkung (17) und der oberen Verstärkung (15) ist.

5. Tür (3) eines Kraftfahrzeugs (1) nach einem der Ansprüche 1 bis 4, **dadurch gekennzeichnet, dass** die Tür (3) den äußeren Öffnungsbefehl (11A) umfasst, der an dem äußeren Öffnungsbefehlsträger (11) befestigt ist, wobei der äußere Öffnungsbefehl (11A) vom einziehbaren Typ ist.

6. Kraftfahrzeug (1) mit mindestens einer Tür (3), **dadurch gekennzeichnet, dass** die Tür (3) nach einem der Ansprüche 1 bis 5 ist.

## Claims

1. Motor vehicle (1) door (3) with an outer wall and a lining (7) forming a box (9), said box (9) comprising:
- a main lateral reinforcement (17) extending longitudinally between a front edge (9A) and a rear edge (9C) of said box (9);
- an upper reinforcement (15) extending longitudinally along an upper edge (9B) of said box (9);
- an external opening control support (11) of the door (3), fixed to the upper reinforcement (15);
- an auxiliary lateral reinforcement (21) which extends above the main lateral reinforcement (17), longitudinally between the front (9A) and rear (9C) edges of the box (9),
the external opening control support (11) of the door (3) being a plate with an upper edge (11D) fixed to the upper reinforcement (15) and a lower edge (11E) fixed to the auxiliary lateral reinforcement (21), **characterized in that** the fixing of the upper edge (11D) and of the lower edge (11E) of the external opening control support (11) to the upper reinforcement (15) and to the auxiliary lateral reinforcement (21), respectively, are distributed over more than 80% of the length of each of said edges (11D, 11E), each of the main lateral reinforcement (17), the upper reinforcement (15) and the auxiliary lateral reinforcement (21) forms a beam with a quadratic bending moment, the quadratic bending moment of the auxiliary lateral reinforcement (21) being less than 50% at the quadratic bending moment of the main lateral reinforcement (17).

2. Door (3) of a motor vehicle (1) according to claim 1, **characterized in that** the auxiliary lateral reinforcement (21) comprises a rear end (21B) fixed to a central portion (9C.2) of the rear edge (9C) of the caisson (9), said central portion (9C.2) being adjacent to an upper portion (9C.3) of said rear edge (9C) with a zone for fixing a lock (11B) of the door (3).

3. Door (3) of a motor vehicle (1) according to claim 2, **characterized in that** the support for controlling the external opening (11) is adjacent to the lock fixing area (11B) of the door (3).

4. Door (3) of a motor vehicle (1) according to one of claims 1 to 3, **characterized in that** the box (9) is free of a vertical reinforcement between median portions (17C, 15D) of the main lateral reinforcement (17) and of the upper reinforcement (15).

5. Door (3) of a motor vehicle (1) according to one of claims 1 to 4, **characterized in that** the door (3) comprises the external opening control (11A) fixed to the external opening control support (11), the said external opening control (11A) being of the retractable type.

6. Motor vehicle (1) comprising at least one door (3), **characterized in that** said door (3) is according to one of claims 1 to 5.
